(19) Europäisches Patentamt
European Patent Office
Office européen des brevets

(11) Publication number: 0 013 582 A1

# (12) EUROPEAN PATENT APPLICATION

(21) Application number: 80200008.3

(22) Date of filing: 04.01.80

(51) Int. Cl.[3]: A 01 N 57/14 //(A01N57/14, 53/00, 37/38)

(30) Priority: 12.01.79 GB 7901236

(43) Date of publication of application: 23.07.80 Bulletin 80/15

(84) Designated Contracting States: BE DE FR GB IT NL

(71) Applicant: SHELL INTERNATIONALE RESEARCH MAATSCHAPPIJ B.V.
Carel van Bylandtlaan 30
NL-2596 HR DEN HAAG(NL)

(72) Inventor: Badmin, John Stewart
26, Arundel Avenue
Sittingbourne Kent(GB)

(72) Inventor: Fisher, John Philip
Downside Stockers Hill Rodmersham Green
Sittingbourne Kent(GB)

(74) Representative: Keuzenkamp, Abraham et al,
c/o Shell Internationale Research Maatschappij B.V. P.O. Box 302
NL-2501 CH 's-Gravenhage(NL)

## (54) Pesticidal compositions and their use.

(57) The invention provides pesticidal compositions containing the compounds of formula

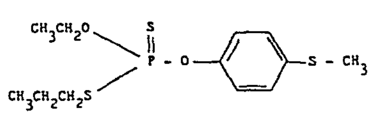 (I)

known as sulprofos, and pyrethroid insecticides of formula

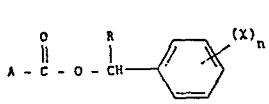 (II)

wherein A is an optionally-substituted aralkyl, alkyl, cycloalkyl or arylaminoalkyl group, R is hydrogen, cyano or ethynyl, X is alkyl, alkenyl, aralkyl or aryloxy and *n* is 1 to 5, and their use in combating pests.

Compositions according to the invention exhibit enhanced pesticidal activity against aphids such as *Aphis fabae*, the black bean aphid.

EP 0 013 582 A1

PESTICIDAL COMPOSITIONS AND THEIR USE

This invention relates to pesticidal compositions, their preparation and their use.

O-ethyl O-(4-methylthio)phenyl S-propyl phosphorodithioate, commonly referred to as sulprofos, is described, together with its use as an insecticide, in Belgian Patent Specification No. 764,116.

A class of insecticides commonly referred to in the art as "pyrethroid insecticides" is also known and various examples of pyrethroid insecticides are described, together with their preparation, in UK Patent Specification No. 1,413,491 and US Patents Nos. 3,835,178 and 3,996,244.

It has now surprisingly been discovered that mixtures of sulprofos and certain pyrethroid insecticides exhibit synergistic pesticidal activity against aphids.

The invention provides a pesticidal composition which comprises:-

(a) the compound of formula

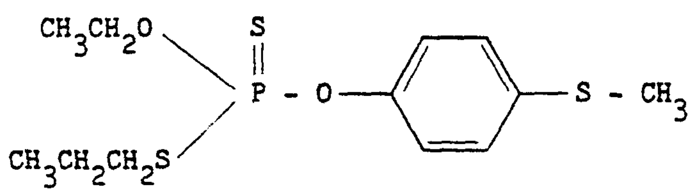

(I)

hereinafter referred to as sulprofos; and

(b) a pyrethroid insecticide having the following general formula:-

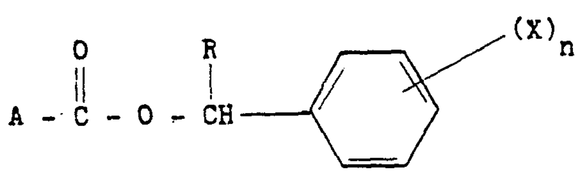

(II)

wherein A is an optionally-substituted aralkyl, alkyl, cycloalkyl or arylaminoalkyl group, R is hydrogen, cyano or ethynyl, X is alkyl, alkenyl, aralkyl or aryloxy and $\underline{n}$ is 1 to 5.

An alkyl, cycloalkyl or alkenyl group represented by A or X preferably contains up to 6 carbon atoms, and an aralkyl, arylamino-alkyl or aryloxy group represented by A or X preferably contains up to 12 carbon atoms.

It should be understood that the compound of the general formula II may be present in the form of any one of its optical or geometric, for example cis-trans, isomers, or in the form of a mixture of isomers, for example a racemate. A mixture of two or more compounds according to the general formula II may be present.

When A represents an optionally-substituted cycloalkyl group, it preferably represents a cyclopropyl group of general formula:-

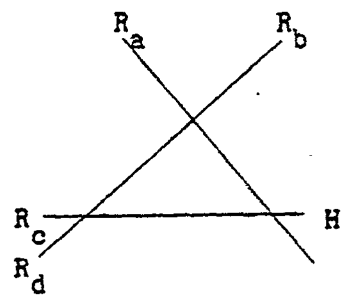

(III)

wherein $R_a$ and $R_b$ both represent an alkyl group having from 1 to 6 carbon atoms, especially a methyl group, or a halogen atom, especially a chlorine, bromine or fluorine atom; or $R_a$ and $R_b$ together represent an alkylene group having from 2 to 6, especially 3, carbon atoms; or $R_a$ represents a hydrogen atom and $R_b$ represents an alkenyl group having from 2 to 6 carbon atoms, especially an isobutenyl group, or a haloalkenyl group having from 2 to 6 carbon atoms and from 1 to 3 chlorine and/or bromine atoms, especially a monochlorovinyl, monobromovinyl, dichlorovinyl or dibromovinyl group, or a haloalkyl group having from 2 to 6 carbon atoms and from 2 to 5 chlorine and/or bromine atoms, especially a tetrachloroethyl, tetrabromoethyl or dibromodichloroethyl group; or $R_a$ and $R_b$ together with the interjacent

carbon atom represent an unsaturated carbocyclic ring system of up to 12 carbon atoms, especially an indenylidene group; $R_c$ and $R_d$ both represent an alkyl group having 1 to 6 carbon atoms, especially a methyl group; or $R_c$ and $R_d$ together represent an alkylene group having from 2 to 6, especially 3, carbon atoms. Preferably $R_a$ and $R_b$ both represent a methyl group or a chlorine atom, or $R_a$ and $R_b$ together represent an alkylene group containing 3 carbon atoms, or $R_a$ represents a hydrogen atom and $R_b$ represents an isobutenyl group, a monochlorovinyl, monobromovinyl, dichlorovinyl or dibromovinyl group or a tetrachloroethyl, tetrabromoethyl or dibromodichloroethyl group or $R_a$ and $R_b$ together with the interjacent carbon atom represent an indenylidene group; and $R_c$ and $R_d$ both represent methyl groups or $R_c$ and $R_d$ together represent an alkylene group containing 3 carbon atoms.

When A in the general formula I represents an optionally-substituted aralkyl group, it preferably represents a substituted benzyl group of the general formula:-

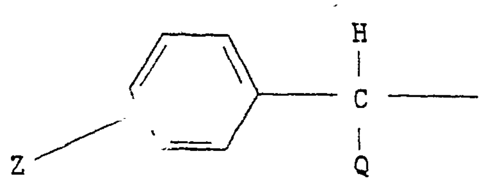

(IV)

wherein Z represents a halogen, preferably chlorine, atom, or an alkoxy or haloalkoxy group of 1 to 4 carbon atoms, for example a methoxy or difluoromethoxy group, and Q represents an alkyl group of 1 to 6 carbon atoms, especially a branched chain group, for example an isopropyl group. Preferably the group Z is in the 4-position on the benzene ring.

When A represents an optionally substituted arylaminoalkyl group, it preferably represents a substituted anilinomethyl group of general formula:-

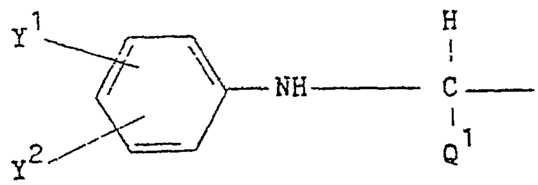

(V)

wherein $Y^1$ and $Y^2$ each independently represents a halogen, preferably chlorine, atom, or an alkyl or haloalkyl group of 1 to 4 carbon atoms, for example a trifluoromethyl group, and $Q^1$ represents an alkyl group of 1 to 6 carbon atoms, especially a branched chain group, for example an isopropyl group. Preferably $Y^1$ is a chlorine atom in the 2-position on the benzene ring and $Y^2$ is a trifluoromethyl group in the 4-position on the benzene ring.

Preferably n represents 1 and X represents a phenoxy or a benzyl group, especially a 3-phenoxy or 3-benzyl group.

The most preferred pyrethroid insecticides for use in the pesticidal composition according to the invention have the general formula II wherein A is alpha-isopropyl-4-chlorobenzyl, 2,2,3,3-tetramethylcyclopropyl, 2-(2,2-dichlorovinyl)-3,3-dimethylcyclopropyl, or 2-(2,2-dibromovinyl)-3,3-dimethylcyclopropyl; R is hydrogen or cyano; and n is 1 and X is 3-phenoxy. Especially preferred are the compounds known as permethrin and fenvalerate whose formulae are given in the Example herein.

The weight ratio of the pyrethroid insecticide to sulprofos is preferably in the range 5:1 to 1:200, more preferably in the range 1:1 to 1:100.

The mixture of sulprofos and the pyrethroid insecticides produces a surprising synergistic effect, for example with respect to aphids, for example *Aphis fabea*, the black bean aphid. The invention therefore also provides a method of combating pests at a locus which comprises applying to that locus a pesticidal

composition according to the invention.

The pesticidal composition according to the invention preferably also comprises a carrier, especially at least two carriers, at least one of which is a surface-active agent.

This invention also provides a process for preparing a pesticidal composition which comprises bringing a compound of formula (I) and a pyrethroid insecticide of formula (II) into association with at least one carrier therefor.

A carrier in a composition according to the invention is any material with which the active ingredient is formulated to facilitate application to the locus to be treated, which may for example be a plant, seed or soil, or to facilitate storage, transport or handling. A carrier may be a solid or a liquid, including a material which is normally gaseous but which has been compressed to form a liquid, and any of the carriers normally used in formulating pesticidal compositions may be used.

Suitable solid carriers include natural and synthetic clays and silicates, for example natural silicas such as diatomacious earths; magnesium silicates, for example talcs; magnesium aluminium silicates, for example attapulgites and vermiculites; aluminium silicates, for example kaolinites, montmorillonites and micas; calcium carbonate; calcium sulphate; synthetic hydrated silicon oxides and synthetic calcium or aluminium silicates; elements, for example carbon and sulphur; natural and synthetic resins, for example coumarone resins, polyvinyl chloride, and styrene polymers and copolymers; solid polychlorophenols; bitumen; waxes, for example beeswax, paraffin wax, and chlorinated mineral waxes; and solid fertilisers, for example superphosphates.

Suitable liquid carriers include water; alcohols, for example isopropanol and glycols; ketones, for

BAD ORIGINAL

example acetone, methyl ethyl ketone, methyl isobutyl ketone and cyclohexanone; ethers; aromatic or araliphatic hydrocarbons, for example benzene, toluene and xylene; petroleum fractions, for example kerosine and light mineral oils; chlorinated hydrocarbons, for example carbon tetrachloride, perchloroethylene and trichloroethane. Mixtures of different liquids are often suitable.

Pesticidal compositions are often formulated and transported in a concentrated form which is subsequently diluted by the user before application. The presence of small amounts of a carrier which is a surface-active agent facilitates this process of dilution.

A surface-active agent may be an emulsifying agent, a dispersing agent or a wetting agent; it may be nonionic or ionic. Examples of suitable surface-active agents include the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohol or alkyl phenols, for example p-octylphenol or p-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates such as sodium dodecylbenzene sulphonate; and polymers of ethylene oxide and copolymers of ethylene oxide and

BAD ORIGINAL

propylene oxide.

The compositions of the invention may for example be formulated as wettable powders, dusts, granules, solutions, emulsifiable concentrates, emulsions, suspension concentrates and aerosols. Wettable powders usually contain 25, 50 and 75% w of active ingredient and usually contain, in addition to solid inert carrier, 3-10% w of a dispersing agent and, where necessary, 0-10% w of stabiliser(s) and/or other additives such as penetrants or stickers. Dusts are usually formulated as a dust concentrate having a similar composition to that of a wettable powder but without a dispersant, and are diluted in the field with further solid carrier to give a composition usually containing ½-10% w of active ingredient. Granules are usually prepared to have a size between 10 and 100 BS mesh (1.676 - 0.152 mm), and may be manufactured by agglomeration or impregnation techniques. Generally, granules will contain ½-25% w active ingredient and 0-10% w of additives such as stabilisers, slow release modifiers and binding agents. Emulsifiable concentrates usually contain, in addition to a solvent and, when necessary, co-solvent, 10-50% w/v active ingredient, 2-20% w/v emulsifiers and 0-20% w/v of other additives such as stabilisers, penetrants and corrosion inhibitors. Suspension concentrates are usually compounded so as to obtain a stable, non-sedimenting flowable product and usually contain 10-75% w active ingredient, 0.5-15% w of dispersing agents, 0.1-10% w of suspending agents such as protective colloids and thixotropic agents, 0-10% w of other additives such as defoamers, corrosion inhibitors, stabilisers, penetrants and stickers, and water or an organic liquid in which the active ingredient is substantially insoluble; certain organic solids or inorganic salts may be present dissolved in the formulation to assist in preventing sedimentation or as antifreeze agents for water.

Aqueous dispersions and emulsions, for example compositions obtained by diluting a wettable powder or a concentrate according to the invention with water, also lie within the scope of the present invention. The said emulsions may be of the water-in-oil or of the oil-in-water type, and may have a thick 'mayonnaise'-like consistency.

The compositions of the invention may also contain other ingredients, for example, other compounds possessing pesticidal, herbicidal or fungicidal properties.

The following Example illustrates the invention.

Example

Activity of Pyrethroid/Sulprofos mixtures against *Aphis fabae* (black bean aphid)

The activities against *Aphis fabae* of sulprofos, the pyrethroid insecticide of formula

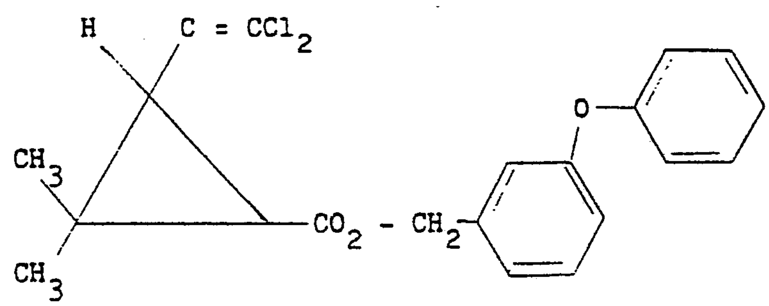

known as permethrin, the pyrethroid insecticide of formula

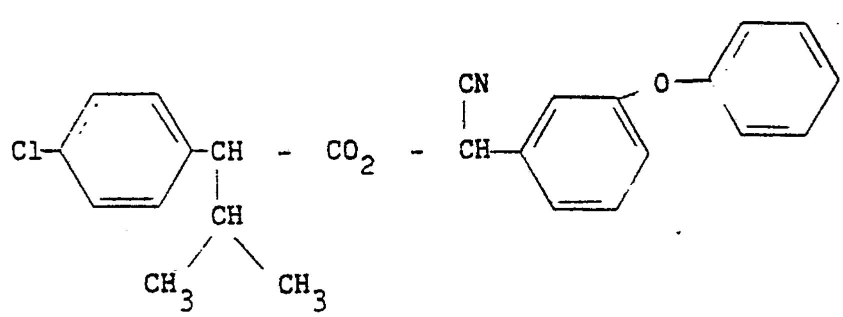

known as fenvalerate, and mixtures of sulprofos with each of these two pyrethroid insecticides, were assessed by the following method.

Test solutions or suspensions were made up in water containing 0.4% by weight active ingredient, 20% by weight acetone and 0.5% by weight Triton X-100 (Trade Mark). These solutions or suspensions were subsequently diluted to produce compositions containing various concentrations of active ingredient.

Pairs of leaves were removed from broad-bean plants and placed ventral side uppermost on filter paper inside petri dishes. The leaves were sprayed with the test solution using a logarithmic spraying machine and a dosage equivalent to 400 litres/hectare, and allowed to dry for ½-1 hour. Each leaf pair was infested with 10 aphids. Temperature was held constant at $23°C \pm 2°C$, humidity and light fluctuated. The number of dead and moribund insects was counted after 24 hours. From the results, the $LC_{50}$ (the lethal dosage in percentage by weight required to kill 50% of the test insects) was calculated.

Toxicity indices were then calculated using the following formula:

$$\text{Toxicity Index} = \frac{LC_{50} \text{ of standard}}{LC_{50} \text{ of compound or mixture}} \times 100$$

The standard used was ethyl parathion.

The joint action of the two active components of a mixture was analysed by the method of Yun-Pei Sun and E.R. Johnson, Journal of Economic Entomology, 1960, Vol. 53 no. 5, pp. 887-892. A coefficient of co-toxicity of a mixture is given by:-

$$\text{coefficient of co-toxicity of mixture} = \frac{\text{actual toxicity index of mixture}}{\text{theoretical toxicity index of mixture}} \times 100$$

The theoretical toxicity index of a mixture is equal to the sum over both components of the percentage of each individual compound present in the mixture multiplied by its respective toxicity index.

A coefficient of co-toxicity of a mixture near 100 indicates the probability of similar action by the two compounds; independent action usually gives a coefficient less than 100; and a coefficient significantly above 100 strongly indicates synergism.

The results obtained are illustrated in the following Table:-

| Test Compounds | $LC_{50}$ | Coefficient of co-toxicity |
|---|---|---|
| sulprofos | 0.082 | |
| permethrin | 0.0013 | |
| fenvalerate | 0.0011 | |
| sulprofos/permethrin 40:1 mixture | 0.019 | 169 |
| sulprofos/fenvalerate 40:1 mixture | 0.018 | 157 |

The coefficients of co-toxicity obtained indicate synergism in the mixtures tested.

CLAIMS

1. A pesticidal composition characterised in that the active ingredient comprises a combination of

(a) the compound of formula

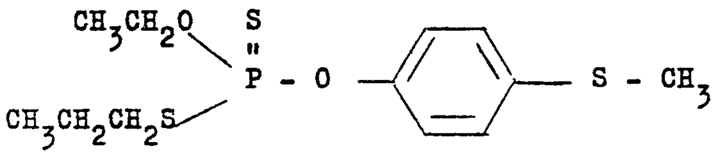

(I)

and

(b) a pyrethroid insecticide having the general formula

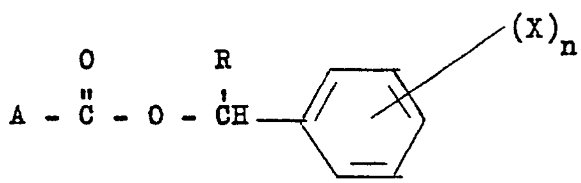

(II)

wherein A is an optionally-substituted aralkyl, alkyl, cycloalkyl or arylaminoalkyl group, R is hydrogen, cyano or ethynyl, X is alkyl, alkenyl, aralkyl or aryloxy, and n is 1 to 5.

2. A composition according to Claim 1 further characterised in that n is 1 and X is a 3-phenoxy group.

3. A composition according to Claim 1 or 2 further characterised in that in the pyrethroid insecticide of formula (II) A is a cyclopropyl group of formula

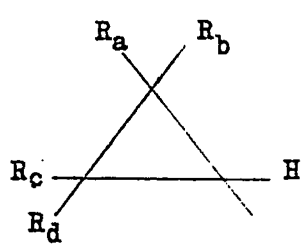

(III)

wherein $R_a$ and $R_b$ both represent a methyl group or a chlorine atom, or $R_a$ and $R_b$ together represent an alkylene group containing 3 carbon atoms, or $R_a$ represents a hydrogen atom and $R_b$ represents an isobutenyl group, a monochlorovinyl, monobromovinyl, dichlorovinyl or dibromovinyl group or tetrachloroethyl, tetrabromoethyl or dibromodichloroethyl group, or $R_a$ and $R_b$ together with the interjacent carbon atom represent an indenylidene group, and $R_c$ and $R_d$ both represent methyl groups or $R_c$ and $R_d$ together represent an alkylene group containing 3 carbon atoms.

4. A composition according to any one of Claims 1 to 3 further characterised in that the pyrethroid insecticide of formula II is permethrin.

5. A composition according to Claim 1 or 2 further characterised in that in the pyrethroid insecticide of formula II A is a substituted benzyl group of formula.

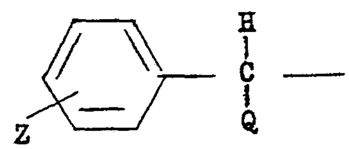

(IV)

wherein Z is a halogen atom or an alkoxy or haloalkoxy group of 1 to 4 carbon atoms and Q is a branched-chain alkyl group of up to 6 carbon atoms.

6. A composition according to any one of Claims 1, 2 and 5 further characterised in that the pyrethroid insecticide of formula II is fenvalerate.

7. A composition according to any one of Claims 1 to 6 further characterised in that the pyrethroid insecticide and the compound of formula I are present in the composition in relative amounts by weight in the range 5:1 to 1:200.

8. A composition according to Claim 7 further characterised in that the relative amounts by weight are in the range 1:1 to 1:100.

9. A method of combating pests at a locus characterised by applying to the locus a pesticidal composition according to any one of Claims 1 to 8.

0013582

European Patent Office

# EUROPEAN SEARCH REPORT

Application number
EP 80 20 0008

| Category | DOCUMENTS CONSIDERED TO BE RELEVANT — Citation of document with indication, where appropriate, of relevant passages | Relevant to claim | CLASSIFICATION OF THE APPLICATION (Int Cl. 3) |
|---|---|---|---|
| | FR - A - 2 331 960 (THE WELLCOME FOUNDATION)<br>* Claims *<br>-- | 1-9 | A 01 N 57/14//<br>(A 01 N 57/14<br>53/00<br>37/38) |
| | CHEMICAL ABSTRACTS, vol. 84, no. 9, 1st March 1976, page 174, no. 55327b<br>Columbus, Ohio, U.S.A.<br>& JP - A - 75 58237 (SUMITOMO) (21-05-1975)<br>* Abstract *<br>-- | 1-9 | |
| A,D | BE - A - 764 116 (BAYER) | | |
| A | RESEARCH DISCLOSURE, no. 151, November 1976, abstract no. 15106<br>Homewell, Havant, Hampshire, G.B. "Insecticidal mixtures"<br>-- | | |
| A | RESEARCH DISCLOSURE, no. 161, September 1977, abstract no. 16176<br>Homewell, Havant, Hampshire, G.B. "Pesticide mixtures for use in acricultural and animal health outlets"<br>---- | | |

TECHNICAL FIELDS SEARCHED (Int.Cl. 3)

A 01 N 57/14
53/00
37/38

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 17-03-1980 | DECORTE |